# EUROPÄISCHE PATENTSCHRIFT

(11) **EP 0 534 308 B1**
(45) Veröffentlichungstag und Bekanntmachung des Hinweises auf die Patenterteilung: **04.06.1997**
(21) Anmeldenummer: 92115876.2
(22) Anmeldetag: 17.09.1992
(51) Int. Cl.: C08L 77/06, B65D 83/14, B05B 11/00

(54) **Kunststoffwerkstoff und dessen Verwendung**
Plastic material and its use
Matériau plastique et son application

(30) Priorität: 21.09.1991 DE 4131436
(43) Veröffentlichungstag der Anmeldung: 31.03.1993
(73) Patentinhaber: Lechner, Roland, D-10781 Berlin (DE)
(72) Erfinder: Lechner, Roland, D-10781 Berlin (DE)
(74) Vertreter: Hiebsch, Gerhard F., Dipl.-Ing.

(56) Entgegenhaltungen:
- EP-A- 0 086 377
- EP-A- 0 230 815
- EP-A- 0 233 428

## Beschreibung

Die Erfindung betrifft einen Kunststoffwerkstoff für die Herstellung von --zum Einsatz in Vorrichtungen bestimmten -- Einbauteilen, insbesondere von Ventilkörpern für Ventile sowie die Verwendung des Kunststoffwerkstoffes.

In der betrieblichen -- vor allem der chemischen und kosmetischen -- Praxis besteht häufig der Wunsch nach lösungsmittelbeständigen und demnach flexiblen sowie leicht bewegbaren Einbauteilen. Beispielsweise sucht man solche Einbauteile als Ventilkörper in Ventilen von Druckgefäßen wie etwa in Aerosoldosen.

Aerosolbehälter werden beispielsweise seit mehreren Jahren zur Verpackung von Mehr-Komponenten-Polyurethansystemen eingesetzt, wie sie in der Baubranche Verwendung finden.

Für die Bedürfnisse in der Kosmetik-Branche sind derartige Behälter wenig oder gar nicht geeignet, da insbesondere der Ventilmechanismus den dabei verwendeten Chemikalien nicht gewachsen ist. Vor allem weisen die bislang eingesetzten Ventilkörper eine zu geringe Lösungsmittelbeständigkeit -- etwa gegen Azeton, Methylenchlorid, Trichlorethylen od.dgl. -- auf, wenn sie genügend elastisch sein sollen. Zudem soll insbesondere für herkömmliche Spraydosen -- etwa für ein Mehr-Komponenten-System, bei dem immer zumindest zwei Ventile gleichzeitig bedient werden -- die Auslösekraft des Ventils aus Gründen leichter Bedienbarkeit gering bleiben, bevorzugt unter 30 N liegen. Darüberhinaus sollte ein Ventilkörper mit dem ihm zugeordneten Sitz eine i.w. gasdichte Paarung ergeben, um Gasverluste nach Möglichkeit zu vermeiden.

Die EP-A-0 230 815 beschreibt eine thermoplastische Mischung aus 0,1 % bis 99,9 % Polyetheresteramiden und 99,9 % bis 0,1 % Styrol-Butadien-Styrolen womit den Extruderteilen günstige mechanische Eigenschaften verliehen werden sollen. Diese weisen Shore Härten A zwischen 74 und 96 auf.

Aufgabe vorliegender Erfindung ist es, eine Kunststoffmischung zur Verfügung zu stellen, die es ermöglicht, Einbauteile von Vorrichtung und insbesondere Ventilkörper von Ventilen herzustellen, die lösungsmittelbeständig sind, einen geringen Gasverlust aufweisen und leicht bedient zu werden vermögen.

Zur Lösung dieser Aufgabe führt die Lehre des unabhängigen Patentanspruches; die Unteransprüche 2 bis 6 geben günstige Weiterbildungen an, die Unteransprüche 2 bis 12 Anwendungen der erfindungsgemäßen Kunststoffmischung.

Erfindungsgemäß enthält der Kunststoffwerkstoff als Kunststoffmischung etwa 40 bis 95 Gew.-% wenigstens eines Polyetherblockamids einer nach DIN 53505 gemessenen Shore Härte D von 45 und/oder 40 und bis zu etwa 60 bis 5 Gew.-% eines Styrol-Butadien-Elastomeren. Bevorzugt wird eine Kunststoffmischung mit 88 bis 95 Gew.-% eines Polyetherblockamids einer Shore Härte D von 45 sowie 12 bis 5 Gew.-% eines Styrol-Butadien-Elastomeren (Shore Härte A von 40). Eine weitere günstige Kunststoffmischung setzt sich aus 40 bis 47,5 Gew.-% eines solchen Polyetherblockamids einer Shore Härte D von 45; 40 bis 47,5 Gew.-% eines Polyetherblockamids einer Shore Härte D von 40 sowie 20 bis 5 Gew.-% eines Styrol-Butadien-Elastomeren zusammen.

Vorteilhaft ist eine Kunststoffmischung, enthaltend 44 bis 46 Gew.-% eines Polyetherblockamids einer Shore Härte D von 45, 44 bis 46 Gew.-% eines Polyetherblockamids einer Shore Härte D von 40 und 12 bis 8 Gew.-% eines Styrol-Butadien-Elastomeren.

Besonders bevorzugt wird eine Kunststoffmischung, enthaltend 45 Gew.-% eines Polyetherblockamids einer Shore Härte D von 45, 45 Gew.-% eines Polyetherblockamids einer Shore Härte D von 40 und 10 Gew.-% eines Styrol-Butadien-Elastomers.

Nach einem weiteren Merkmal der Erfindung weisen eingesetzte Polyetherblockamide -- wie schon erwähnt -- eine Shore Härte D von 45 Grad oder eine Shore Härte D von 40 Grad auf, jeweils gemessen nach DIN 53505.

Bei den Polyetherblockamiden kann es sich um Ether-Amid Elastomere handeln. Ether-Amid Elastomere -- und dabei insbesondere die Blockpolymere -- bestehen innerhalb einer Kette aus alternierenden und ausreichend langen harten und weichen Segmenten. Die Elastomereigenschaften kommen durch die Wechselwirkung dieser Ketten untereinander zustande.

Die Elastomereigenschaften können durch physikalische, chemische oder physikalische und chemische Vernetzung erreicht werden.

Polyetherblockamide sind beispielsweise Polyamide basierend auf Caprolactam und der Fachwelt auch als PA-6-Elastomere bekannt. Bevorzugt sind auch Polyetheresteramide.

Bei den Styrol-Butadien-Elastomeren -- bevorzugt solchen einer Shore Härte A von 40°, gemessen nach DIN 53505 -- besteht die Matrix solcher Blockcopolymeren aus einem Masseanteil von beispielsweise etwa 60% aus Elastomer, wie z.B. aus kautschukartigen Segmenten von Polybutadien, und die physikalischen Vernetzungsstellen mit einem Masseanteil von etwa 2 x 20% bestehen aus Polystyrol, das in Form zweier endständiger Blöcke chemisch mit dem Ealstomer verbunden ist.

Eine besonders günstige Lösungsmittelresistenz wird beispielsweise mit einer Mischung von etwa 90 Gew.-% eines Polyetherblockamids der Shore Härte D von 45 und etwa 10 Gew.-% eines Styrol-Butadien einer Shore Härte A von 40 erreicht. Die Auslösekraft ist dabei verhältnismäßig hoch, die durchschnittliche Quellung liegt bei 11 % bei geringem Gasverlust.

Die Auslösekraft ist bei einer Mischung von etwa 45 Gew.-% % des vorstehend genannten Polyetherblockamides sowie etwa 45 % eines weiteren Polyetherblockamids der Shore Härte D von 40 und 10 Gew.-% Styrol-Butadien der Shore Härte A von 40 optimal, die durchschnittliche Quellung liegt bei 12 %. Hier ist der Gasverlust höher als im vorgenannten Beispiel.

Die eingesetzten thermoplastischen Elastomere (TPE) können zur Verbesserung der Alterungsbeständigkeit stabilisiert sein. Sie werden vornehmlich auf Spritzgußmaschinen mit heißem Zylinder und kaltem Werkzeug verarbeitet - wie gewöhnliche thermoplastische Kunststoffe.

Die erfindungsgemässen Kunststoffmischungen sind zur Fertigung von Ventilkörpern in Ventilen von Aerosolbehältern besonders geeignet. Deshalb umfasst vorliegende Erfindung auch solche Ventilkörper bestehend aus oder enthaltend genannte Kunststoffmischungen, wobei diese Ventilteile in Aerosoldosen Anwendung finden können, vor allem bei Ventilkörpern für Mehr-Komponenten-Aerosolbehälter.

Entsprechend betrifft die Erfindung auch Aerosolbehälter mit Ventilen, deren die Ventilkörper aus den erfindungsgemässen Kunststoffmischungen bestehen oder diese enthalten. Bevorzugt ist der Einsatz in im Zwei-Komponenten-Aerosolbehältern -- wie sie beispielsweise als Druckbehälter für Gase, Flüssigkeiten, pastöse Produkte od.dgl. bekannt sind und etwa in der EP-B 0 111 089 beschrieben werden -- und vor allem als einstückige Ventilkörper, die insbesondere durch Spritzgiessen hergestellt werden. Solche Ventilkörper können Teile von in einer gemeinsamen Ventilplatte sitzenden Auslaßventilen sein, die je mit einem Druckraum in Verbindung stehen sowie -- ebenfalls gemeinsam durch ein in axialer Richtung verschiebbares, radial unbewegliches und gegen axiales Verschwenken gesichert geführtes Auslöseorgan betätigbar sind.

Ventilgruppen dieser vorbekannten Art werden gemeinsam betätigt, wozu auch ein schwenkbar gelagertes Hebelglied eingesetzt zu werden vermag, dessen Schwenkachse parallel zu einer durch das Zentrum der Ventilkörper gelegten Geraden verläuft.

Zudem liegt im Rahmen der Erfindung die Verwendung der bevorzugten Kunststoffmischung für Ventilteile von Aerosoldosen. Zweckmässige Kunststoffmischungen, sowie vorteilhafte Ventilteile von Aerosoldosen für die genannte Verwendung sind weiter oben beschrieben.

Weitere Vorteile, Merkmale und Einzelheiten der Erfindung ergeben sich auch aus der nachstehenden Beschreibung bevorzugter Ausführungsbeispiele.
1. Folgende Mischungen werden angesetzt und zu Ventilkörpern verspritzt:
a) 95 Gew.-% Polyetherblockamid Shore D 45 + 5 Gew.-% Styrol-Butadien-Elastomer
b) 92,5 Gew.-% Polyetherblockamid Shore D 45 + 7,5 Gew.-% Styrol-Butadien-Elastomer
c) 90 Gew.-% Polyetherblockamid Shore D 45 + 10 Gew.-% Styrol-Butadien-Elastomer

2. Die gespritzen Ventilkörper werden in einen Ventilhalter eingesetzt und dieser wird mit einem Ventilteller zusammengefügt. Die ganze Montagegruppe wird dann mit einer Aerosoldose verbunden und mit einem Treibgas befüllt.
Diejenige Kraft, die beim Betätigen des Ventils zu einem Entweichen des Treibgases führt, wird als Auslösekraft bezeichnet.

| Ventilkörper der Mischung | Auslösekraft N |
|---|---|
| a) | 80,4 |
| b) | 71,4 |
| c) | 69,7 |

3. An den Ventilkörpern wird das Quellverhalten bestimmt. Dazu werden Proben von Ventilkörpern bestimmten Durchmessers während 24h in verschiedene Lösungsmittel eingelegt und das Mass der Quellung durch Vergleich von Auszugsmass und Quellmass und errechnen der Masserhöhung in % bestimmt.

| Ventilkörper der Mischung | Quellmasserhöhung in % in | | |
|---|---|---|---|
| | Aceton | Methylenchlorid | Trichlorethylen |
| a) | 3,35 | 12,9 | 13,7 |
| b) | 3,1 | 12,95 | 13,85 |
| c) | 3,3 | 11,8 | 13,1 |

4. Zur Messung des Gasverlustes werden wie in Beispiel 2 mit Treibgas befüllte Aerosoldosen hergestellt und die Aerosoldosen während 10 Tagen bei 50°C gelagert. Der Gasverlust wird durch die Bestimmung des Gewichtsverlustes der Aerosoldosen durch Wägung gemessen.

| Ventilkörper der Mischung | Verlust in 0,01 g/d (Gramm/Tag) |
|---|---|
| a) | 7,0 |
| b) | 6,8 |
| c) | 6,4 |

5. Es wird folgende Mischung hergestellt und zu Ventilkörpern verspritzt:
- 45 Gew.-%: Polyetherblockamid Shore Härte D 45
- 45 Gew.-%: Polyetherblockamid Shore Härte D 40
- 10 Gew.-%: Styrol-Butadien-Elastomer

Die Ventilkörper werden gemäss Beispiel 2 auf die Auslösekraft geprüft, wobei eine Auslösekraft von 55 N ermittelt wird.

Bei der Ermittlung des Quellverhaltens wird die Prüfmethode nach Beispiel 3 eingesetzt. Die Quellmasserhöhung in Aceton liegt bei 3,8 %, in Methylenchlorid bei 14,9 % und in Trichlorethylen bei 17,4 %. Der Gasverlust, gemessen nach dem Prüfverfahren gemäss Beispiel 4, beträgt 8,8 gemessen in 0,01 g/d.

## Patentansprüche

1. Kunststoffwerkstoff für die Herstellung beweglicher, lösungsmittelbeständiger und elastischer Einbauteile, insbesondere solcher, die mit einem Gegenelement eine i.w. gasdichte Paarung bilden, enthaltend 40 bis 95 Gew:% wenigstens eines Polyetherblockamids einer nach DIN 53 505 gemessenen Shore Härte D von 45 malfoster 40 und 60 bis 5 Gew.-%, eines Styrol-Butadien-Elastomeren.

2. Kunststoffwerkstoff nach Anspruch 1, enthaltend 88 bis 95 Gew.-% eines Polyetherblockamids mit einer Shore Härte D von 45 sowie 12 bis 5 Gew.-% eines Styrol-Butadien-Elastomeren.

3. Kunststoffwerkstoff nach Anspruch 1, enthaltend 40 bis 47,5 Gew.-% eines Polyetherblockamids einer Shore Härte D von 45, 40 bis 47,5 Gew.-% eines Polyetherblockamids einer Shore Härte D von 40 und 20 bis 5 Gew.-% eines Styrol-Butadien-Elastomeren.

4. Kunststoffwerkstoff nach Anspruch 1, enthaltend 44 bis 46 Gew.-% eines Polyetherblockamids einer Shore Härte D von 45, 44 bis 46 Gew.-% eines Polyetherblockamids einer Shore Härte D von 40 und 12 bis 8 Gew.-% eines Styrol-Butadien-Elastomeren.

5. Kunststoffwerkstoff nach Anspruch 1, enthaltend 45 Gew.-% eines Polyetherblockamids einer Shore Härte D von 45, 45 Gew.-% eines Polyetherblockamids einer Shore Härte D von 40 und 10 Gew.-% eines Styrol-Butadien-Elastomeren.

6. Kunststoffwerkstoff nach einem der Ansprüche 1 bis 5, dadurch gekennzeichnet, daß das Styrol-Butadien-Elastomer eine nach DIN 53 505 gemessene Shore Härte A von etwa 40 aufweist.

7. Ventilkörper für ein Ventil, der aus einem Kunststoffwerkstoff nach wenigstens einem der Ansprüche 1 bis 6 besteht oder diese enthält.

8. Ventilkörper für ein Ventil, der aus einem Kunststoffwerkstoff nach wenigstens einem der Ansprüche 1 bis 6 einstückig geformt ist.

9. Ventilkörper für ein Ventil zum Einsatz in einem Aerosolbehälter, insbesondere in einem Mehr-Komponenten-Aerosolbehälter, enthaltend einen oder bestehend aus einem Kunststoffwerkstoff nach wenigstens einem der Ansprüche 1 bis 6.

10. Aerosolbehälter mit wenigstens einem Ventilkörper, der aus Kunststoffen gemäs zumindest einem der Ansprüche 1 bis 6 besteht oder diese enthält.

11. Aerosolbehälter nach Anspruch 10, dadurch gekennzeichnet, daß der Aerosolbehälter ein an sich bekannter Mehr-Komponenten-Aerosolbehälter ist.

12. Verwendung des Kunststoffwerkstoffes nach wenigstens einem der Ansprüche 1 bis 6 für Ventilkörper von Aerosolbehältern.

## Claims

1. Plastic material for the production of movable solvent-resistant and elastic components, in particular components forming a substantially gastight pairing together with a counter-element, containing 40 to 95 % by weight of at least one polyether block amide with a Shore-D hardness of 45 and/or 40 as measured in accordance with DIN 53505 and 60 to 5 % by weight of a styrene-butadiene elastomer.

2. Plastic material according to claim 1, containing 88 to 95 % by weight of a polyether block amide having a Shore-D hardness of 45 and 12 to 5 % by weight of a styrene-butadiene elastomer.

3. Plastic material according to claim 1, containing 40 to 47.5 % by weight of a polyether block amide with a Shore-D hardness of 45, 40 to 47.5 % by weight of a polyether block amide with a Shore-D hardness of 40 and 20 to 5 % by weight of a styrene-butadiene elastomer.

4. Plastic material according to claim 1, containing 44 to 46 % by weight of a polyether block amide with a Shore-D hardness of 45, 44 to 46 % by weight of a polyether block amide with a Shore-D hardness of 40 and 12 to 8 % by weight of a styrene-butadiene elastomer.

5. Plastic material according to claim 1, containing 45 % by weight of a polyether block amide with a Shore-D hardness of 45, 45 % by weight of a polyether block amide with a Shore-D hardness of 40 and 10 % by weight of a styrene-butadiene elastomer.

6. Plastic material according to one of claims 1 to 5, characterised in that the styrene-butadiene elastomer has a Shore-A hardness of approximately 40 as measured in accordance with DIN 53505.

7. Valve body for a valve consisting of or containing a plastic material according to at least one of claims 1 to 6.

8. Valve body for a valve made in one piece from a plastic material according to at least one of claims 1 to 6.

9. Valve body for a valve for use in an aerosol container, in particular in a multi-component aerosol container, containing or consisting of a plastic material according to at least one of claims 1 to 6.

10. Aerosol container with at least one valve body consisting of or containing plastic materials according to at least one of claims I to 6.

11. Aerosol container according to claim 10, characterised in that the aerosol container is a multi-component aerosol container known per se.

12. Use of the plastic material according to at least one of claims 1 to 6 for valve bodies of aerosol containers.

## Revendications

1. Matériau plastique pour la fabrication de pièces de montage mobiles, résistantes aux solvants et élastiques, notamment de telles pièces qui, avec un élément complémentaire, forment un assemblage pratiquement étanche aux gaz, comprenant 40 à 95% en poids d'un polyétheramide séquencé, présentant une dureté Shore D de 45 et/ou 40, mesurée selon la norme DIN 53505, et 60 à 5% d'un élastomère styrène-butadiène.

2. Matériau plastique selon la revendication 1, comprenant 88 à 95% en poids d'un polyétheramide séquencé d'une dureté Shore D de 45 ainsi que 12 à 5% en poids d'un élastomère styrène-butadiène.

3. Matériau plastique selon la revendication 1, comprenant 40 à 47,5% en poids d'un polyétheramide séquencé d'une dureté Shore D de 45, 40 à 47,5% en poids d'un polyétheramide séquencé présentant une dureté Shore de 40, et 20 à 5% en poids d'un élastomère styrène-butadiène.

4. Matériau plastique selon la revendication 1, comprenant 44 à 46% en poids d'un polyétheramide séquencé d'une dureté Shore D de 45, 44 à 46% en poids d'un polyétheramide séquencé d'une dureté Shore D de 40 et 12 à 8% en poids d'un élastomère styrène-butadiène.

5. Matériau plastique selon la revendication 1, comprenant 45% en poids d'un polyétheramide séquencé d'une dureté Shore D de 45, 45% en poids d'un polyétheramide séquencé d'une dureté Shore D de 40 et 10% en poids d'un élastomère styrène-butadiène.

6. Matériau plastique selon une quelconque des revendications 1 à 5, caractérisé en ce que l'élastomère styrène-butadiène présente une dureté Shore a, mesurée selon DIN 53505, d'environ 40.

7. Corps de valve pour valve consistant ou comprenant un matériau plastique selon une quelconque des revendications 1 à 6.

8. Corps de valve pour valve, formé en un seul bloc à partir d'un matériau plastique selon une ou plusieurs des revendications 1 à 6.

9. Corps de valve pour valve destiné à être installé sur une bombe d'aérosol, en particulier dans une bombe d'aérosol à plusieurs composants, comprenant ou consistant en un matériau plastique selon une ou plusieurs des revendications 1 à 6.

10. Bombe d'aérosol comportant au moins une valve consistant ou comprenant un matériau plastique selon une ou plusieurs des revendications 1 à 6.

11. Bombe d'aérosol selon la revendication 10, caractérisée en ce que la bombe d'aérosol est une bombe d'aérosol à plusieurs constituants connue.

12. Utilisation d'un matériau plastique selon une ou plusieurs des revendications 1 à 6, pour un corps de valve de bombe d'aérosol.
